# EUROPEAN PATENT APPLICATION

(11) **EP 4 134 149 A1**
(43) Date of publication of application: **15.02.2023**
(21) Application number: 21190871.0
(22) Date of filing: 11.08.2021
(51) Int. Cl.: B01D 39/18, A61K 8/02, A61K 8/73

(54) **FACE MASK WITH A CARRIER LAYER**

(71) Applicant: LENZING AKTIENGESELLSCHAFT, 4860 Lenzing (AT)
(72) Inventor: Gregorich, Katharina, 4813 Altmünster (AT)

(57) **Abstract**

The current disclosure relates to improvements concerning beauty face masks, in particular a face mask comprising an application layer and a carrier layer. The application layer is impregnated with a lotion and comprises a skin-contacting surface and an external surface, wherein the application layer is configured to be applied with its skin-contacting surface on the skin of a user's face. The carrier layer abuts the application layer on its external surface and provides additional stability to the application layer. The carrier layer is removable from the application layer after application of the application layer to the face and the carrier layer comprises regenerated cellulosic fibers. Furthermore it discloses a method for the manufacture of such a face mask.

## Description

The current disclosure relates to improvements concerning beauty face masks.

A beauty face mask is a consumer product applied to the face to improve skin and/or facial care, wellness and beauty. It usually comprises a thin non-woven application layer impregnated with a lotion. The application layer can be applied to the face of a consumer and shall have a good softness, good adhesion to skin and preferably a high transparency when it is adhered to the skin. Further the application layer shall have, inter alia, a good dimensional stability, wet strength and lotion holding capacity.

WO 2018184041 A1 discloses a beauty care face mask comprising a nonwoven web formed from essentially continuous filaments and multibonded by merged filaments, hydrogen bonding and/or physical intermingling of filaments. This multibonded web provides the dimensional stability, wet strength, designed lotion holding capacity and liquid take-up rate, and ability to release said lotions during use (liquid release), distribution of lotion rapidly throughout the mask, softness, desired adhesion to skin, and designed transparency to the face mask.

Further, application layers consisting of several separate layers are known and described for example in US 20150125499 A (disclosing three layered application layer). Therein a nonporous transparent layer is laminated to the application layer in order to keeping the application layer humid. This nonporous transparent layer therefore is intended to stick to the application layer during application of the face mask to the face. The third layer as disclosed in US 20150125499 A is an adhesion layer, serving to improve adhesion of the face mask on the face during application. This transparent layer is laminated to the application layer, as well.

To prevent the thin application layer of the face mask from collapsing before it can be unfolded and applied to the face, the face mask often is provided with a further layer, which can be addressed to as a carrier layer, that eases the use of the product. The face mask, comprising the application layer and the carrier layer, can then be taken out of the packaging by the user, be unfolded and applied to the face with the application layer being in direct contact with and adheres to the skin of the face. The carrier layer can then be withdrawn and disposed of while the application layer remains on the face.

Usually synthetic films made from commodity plastics are used as a carrier layer, as they are readily available, can easily be configured to have a convenient stiffness and can be easily pulled off from the application layer after the mask has been applied to the face. For example, films made of a polyolefin, such as polyethylene or polypropylene, are used as a carrier layer. Nowadays also synthetic mesh fabrics are used as a carrier layer.

Nonetheless, the use of carrier layers made of synthetic materials can lead to ecological problems and contribute to the environmental pollution with microplastics.

Therefore, a need for more environment-friendly alternatives exists.

### Summary

The current application discloses innovations relating to beauty face masks and especially to beauty face masks having a carrier layer.

Surprisingly it was found that it is possible to manufacture a face mask containing a carrier layer wherein all solid parts of the face masks consist mainly of cellulose and therefore has advantages with regard to sustainability, biodegradability, skin-friendliness and comfort. Furthermore surprisingly it was found that by using this carrier the application layer can be thinner, i.e. with a significantly lower basis weight. This contributes to better transparency and clearly helps to save resources as well as improved sustainability. As face masks are typically single use products, the purely cellulosic face masks according to the invention help to support sustainability efforts.

According to a first aspect, the invention concerns a face mask comprising an application layer and a carrier layer, wherein the application layer is impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, wherein the carrier layer comprises regenerated cellulosic fibers.

The carrier layer is combined with the application layer before folding and packing the face mask into the packing for retail, the so-called "sachet". Therefore the carrier layer not only facilitates application of the face mask to the skin, but also provides for a stable and safe storage of the wet face mask, e.g. if the sachet is stored vertically. Preferably the carrier layer comprises a nonwoven material comprising a network of substantially continuous regenerated cellulosic fibers. The physical properties of the nonwoven material may be modified by at least one process selected from a list comprising bonding, hydroentanglement, hydroembossing, perforation, needlepunch and/or chemical bonding. The physical properties of the nonwoven material comprise, among others, pore size, pore density (i.e. number of pores per area), fleece stiffness, tensile strength, thickness of the material. In line with one general object of the invention - providing a sustainable, biodegradable product - the chemical binder for the chemical bonding preferably is a biodegradable binder. Suitable biodegradable binders are generally known to the skilled in the art. Perforation may be applied if the nonwoven material does not possess big pores already by its production process.

In a preferred embodiment of the present invention the cellulosic fibers in the carrier layer are multibonded by merging, hydrogen bonding and/or physically intermingling. The carrier layer according to the invention may be comprised of one or more layers. Two or more layers may be bonded together by bonding techniques like bonding, hydroentanglement, hydroembossing, needlepunch and/or chemical bonding, hydrogen bonding and/or physically intermingling. The chemical binder for the chemical bonding preferably may be a biodegradable binder.

Table 1 shows typical mechanical properties of the carrier layer material according to the invention.

**Table 1:**

| Parameter | Unit | Value |
|---|---|---|
| Specific maximum tensile force MD dry | [N m²/g] | 0.1 to 1.70 |
| Specific maximum tensile force CD dry | [N m²/g] | 0.05 to 1.50 |
| Elongation at maximum tensile force MD dry | [%] | 0.5 to 15 |
| Elongation at maximum tensile force CD dry | [%] | 3 to 30 |
| Specific maximum tensile force MD wet | [N m²/g] | 0.05 to 1.70 |
| Specific maximum tensile force CD wet | [N m²/g] | 0.01 to 1.50 |
| Elongation at maximum tensile force [%]MD wet | [%] | 4 to 30 |
| Elongation at maximum tensile force [%]CD wet | [%] | 4 to 50 |

A further advantage of the face mask according to the invention, in particular if the carrier layer comprises a nonwoven material comprising a network of substantially continuous regenerated cellulosic fibers, and especially if this nonwoven material was manufactured according to a meltblowing process, is the improved adhesion between application layer and carrier layer during storage and application of the face mask to the skin. Thereby slipping - e.g. in the package before use, but also during application to the skin - is diminished compared to a synthetic carrier layer material, and the use of the face mask is more convenient.

Furthermore, in a preferred embodiment of the present invention the application layer comprises a moisture-retaining layer that is located at the external surface of the application layer, wherein the moisture-retaining layer preferably comprises a regenerated cellulosic material. This moisture-retaining layer may be provided in order to reduce or inhibit drying out of the application layer while the face mask is applied to the skin. Therefore this moisture-retaining layer will stay on the application layer during application, while only the carrier layer is removed. To meet this purpose the adhesion between the application layer and the moisture-retaining layer has to be controlled to be higher than the adhesion between the carrier layer and the moisture-retaining layer. The person skilled in the art, once having learned about the invention described herein, can easily derive how to control the adhesion in this way. For example, it was found in the course of this invention that the carrier layer should preferably have a smaller effective surface than the moisture-retaining layer, which can be implemented by producing the carrier layer with fewer, thicker fibers. The application layer and the moisture-retaining layer, however, should both comprise thinner fibers than the carrier layer, thereby providing for a stronger adhesion between both of them compared to the adhesion between the moisture-retaining layer and the carrier layer. The regenerated cellulosic material of the moisture-retaining layer may be a very dense cellulosic nonwoven material with very fine fibers. It may be shaped by methods that are principally known to the expert, such as a Lyocell, viscose or modal process. In case of a nonwoven material, this may consist of fibers with definite length or of a network of substantially continuous fibers. Alternatively it may be a cellulosic film; for this embodiment generally the same rules regarding adhesion control apply, as the film may be considered as having an even higher density than a dense nonwoven material with very fine fibers. Furthermore the cellulosic material of the moisture-retaining layer preferably may be hydrophobic. One possibility to impart hydrophobic properties to the cellulosic material is described in WO 2013/067556 A1. For legislations where this is legally possible, the whole disclosure of WO 2013/067556 A1 is incorporated into this patent application by reference. The hydrophobic agent preferably has to be biodegradable to maintain all benefits of the invention.

The face mask according to the invention may also be equipped with a protection layer that is located on the skin-contacting surface of the application layer, opposite to the carrier layer, thereby forming a kind of sandwich structure. The function of this protection layer is to protect the side of the application layer that is intended to be placed on the skin. It may serve to keep the lotion inside of the application layer before application to the skin. It will be removed after unpacking the face mask and immediately before placing the face mask onto the skin. Preferably, the protection layer may consist of similar or the same material and may show similar or the same properties as the carrier layer. However, its structure may be different, as well. Nevertheless it has to be biodegradable and be made of a cellulosic material in order to maintain all benefits of the invention.

In a possible embodiment of the invention the face mask may comprise a protection layer, an application layer, a moisture-retaining layer and a carrier layer.

Preferably the area of the carrier layer is bigger than the area of the application layer so that the carrier layer juts out of the application layer at least at a part of the edge of the application layer. This facilitates grabbing and stripping off of the carrier layer. Preferably the carrier layer juts out for between 3 mm to 10 mm. At less than 3 mm it gets difficult to grab the carrier layer reliably and more than 10 mm would need too much carrier material.

In a preferred embodiment of the present invention at least a part of the carrier layer is directly manufactured from lyocell spinning solution. Preferably the complete carrier layer is directly manufactured from Lyocell spinning solution, in particular by a so-called "meltblowing" process. A process to obtain such a carrier material is disclosed in WO 2018/184938 A1.

Preferably at least part of the cellulosic fibers of the carrier layer are integrally merged with one another at merging positions. In the context of this invention the term "merging" may particularly denote an integral interconnection of different fibers at the respective merging position which results in the formation of one integrally connected fiber structure composed of the previously separate fiber preforms. Merging may be denoted as a fiber-fiber connection being established during coagulation of one, some or all of the merged fibers. Interconnected fibers may strongly adhere to one another at a respective merging position without a different additional material (such as a separate adhesive) so as to form a common structure. Separation of merged fibers may require destruction of the fiber network or part thereof.

Preferably the fibers of the carrier layer may have diameters ranging from 1 µm to 5000 µm, preferably from 8 µm to 500 µm. This broad scope includes cellulosic materials that are made according to a meltblown process. In this case the larger diameters in particular belong to merging points. Most of the suitable meltblown materials according to the invention may show fiber diameters of up to 500 µm only, however materials with the larger diameters may be suitable, as well. If the nonwoven cellulosic material is not manufactured by a meltblown process, the diameter range is much narrower, more comparable to that of a nonwovens consisting of staple fibers. In such case the fiber diameter may range from 1 µm to 100 µm, preferably from 7 µm to 50 µm.

Preferably the free areas between the cellulosic fibers of the carrier layer, measured horizontally on the surface of the carrier layer, may show distances of between 1 µm and 15000 µm, preferably of between 10 µm and 3000 µm, between the fibers.

Preferably the basis weight of the carrier layer is between 10 and 40 gsm, preferably of between 15 and 25 gsm. Carrier layers with less than 10 gsm will be too weak and too sensitive to stabilize the application layer and to reliably separate the carrier layer from the application layer. Basis weights of more than 40 gsm can get too expensive for this application.

Preferably the carrier layer has a Specific Total Hand value ranging from 4 to 30 mN*m²/g, preferably from 5 to 20 mN*m²/g, more preferably from 10 to 20 mN*m²/g. The Specific Total Hand value is determined as described in the Examples section. It represents a certain "stiffness" of the layer. Such stiffness is important for the usability of the face mask. If the Specific Total Hand value is too high, than the face mask would be too stiff, could not be fold properly and could not be applied to the contour of the face in a smoothly fitting manner. If, to the contrary, the Specific Total Hand value would be too small, the carrier layer would not be able to enable good handling of the face mask. Typical values of the Specific Total Hand (rounded to integer) are e.g. 14, 15, 16, 17 or 18. A Specific Total Hand value of the carrier layer of about 16 allows an especially easy possibility of folding and unfolding of the cosmetic face mask concept being comprised of application layer and carrier layer.

Preferably the regenerated cellulosic fibers of the carrier layer are essentially free of copper and/or nickel. This is a consequence of the operating fluids (in particular lyocell spinning solution, coagulation fluid, washing liquor, gas flow, etc.) which are used during the manufacturing process and which may be substantially free of heavy metal sources such as copper salt. As a result of this design of the manufacturing process, the cellulosic fibers according to the invention may be of high quality and may substantially consist of pure microfibrillar cellulose. The absence of any mentionable heavy metal impurities in the manufacturing process prevents highly undesired decomposition of involved media (in particular of the lyocell spinning solution) and therefore allows to obtain highly reproducible and highly pure cellulose fibers that are biodegradable and skin-friendly.

Preferably the regenerated cellulosic fibers of the carrier layer are essentially free of finish agents. While in regular fiber processing methods - for textile applications as well as for nonwovens applications - finishing agents are usually applied in order to enable the processability of the fibers in certain processing steps, such finishing agents may reduce the hydrophilicity of the fibers. In the context of the present invention it was found that hydrophilic fibers give a more homogeneous distribution of the lotion within the carrier layer and especially within the application layer of the face mask. This can be a big advantage in the application of the face mask. Furthermore the lotion holding capacity of the face mask is improved and provides for less lotion staying in the sachet after the face mask is taken out of the sachet. This provides for a further economic advantage of the face mask according to the invention.

Preferably the cellulosic fibers of the carrier layer are treated with a finishing imparting hydrophobic properties to the carrier layer. One possibility to impart hydrophobic properties to cellulosic fibers is described in WO 2013/067556 A1. The finish preferably has to be biodegradable to maintain all benefits of the invention. This may contribute to saving lotion material for the face mask.

Preferably the carrier layer has an elongation at maximum tensile force [%] MD wet of between 4 and 30% and an elongation at maximum tensile force [%] CD wet of between 4 and 50%.

According to a preferred embodiment of the present invention the application layer comprises regenerated cellulosic fibers. Preferably the application layer comprises a nonwoven material. In a particularly preferred embodiment of the invention the application layer comprises a network of substantially continuous regenerated cellulosic fibers, more preferably directly manufactured from lyocell spinning solution. Even more preferably the complete application layer is directly manufactured from Lyocell spinning solution, in particular by a so-called "meltblowing" process. A process to obtain such an application material is disclosed in WO 2018/184938 A1.

According to a second aspect, the invention concerns a carrier layer for a face mask according to claim 1, wherein the carrier layer comprises regenerated cellulosic fibers. For this carrier layer according to the invention the same features as described above apply.

According to a third aspect, the invention concerns a precursor for a face mask, comprising an application layer and a carrier layer, wherein the application layer is configured to be impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, wherein the carrier layer comprises regenerated cellulosic fibers. This precursor may be used in the method according to the invention as disclosed below. It is a particular advantage of this precursor that it may be manufactured in advance of the manufacture of the face mask according to the invention, even at another location and even by another company than the manufacturer of the final face mask.

According to a third aspect, the invention concerns a method for manufacturing a face mask, wherein the face mask comprises an application layer and a carrier layer, wherein the application layer is impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, wherein the carrier layer and the application layer comprise regenerated cellulosic fibers. There are several methods for assembling a face mask comprising an application layer, a carrier layer and a lotion: A first method consists in combining the dry application layer and the dry carrier layer, subsequently punching the typical face mask shape (with openings for mouth, nose and the eyes), folding this assembly to fit into the sachet, and adding the required amount of lotion into the sachet before sealing the filled sachet. In this method the lotion will be distributed within the face mask during further storage of the whole pack. Alternatively the application layer and the carrier layer, both in dry state, may be combined and thereafter the combined layers may be soaked with the lotion, punched, folded and packed. This procedure may be performed either - and preferably - in a continuous way or discontinuously. According to yet another alternative procedure the application layer material may be first soaked with an appropriate amount of lotion, thereafter combined with the carrier layer, punched, folded and packed. These general assembling methods can also be applied mutatis mutandis to face masks comprising an additional protection layer.

Preferably at least one of or preferably both of the carrier layer and the application layer are manufactured according to a Lyocell meltblowing process. A process to obtain such layers is disclosed in WO 2018/184938 A1. Each of these layers can consist of one or more distinguishable sub-layers. WO 2018/184938 A1 as well discloses in a general way how to obtain such multi-layer materials.

In an even more preferred embodiment of the present invention the carrier layer and the application layer are manufactured inline jointly on the same Lyocell meltblowing production line. "Inline jointly on the same Lyocell meltblowing production line" means for the purpose of the present disclosure that both layers are produced by serially aligning two (or more) jets with orifices through which lyocell spinning solution is extruded for coagulation and fiber formation. Each layer or sub-layer is formed by a specific jet. When such an arrangement is combined with a moving fiber support unit (such as a conveyor belt with a fiber accommodation surface), a first layer of fibers is formed on the fiber support unit by the first jet, and the second jet forms a second layer of fibers on the first layer when the moving fiber support unit reaches the position of the second jet. The process parameters of this method may be adjusted so that each layer finally obtains its specified properties. A process to obtain such layers is disclosed in WO 2018/184938 Al.The properties required for a suitable carrier layer are described above. The properties required for a suitable application layer are disclosed in WO 2018184041 A1. If the face mask material according to the invention is manufactured according to this method, then the process conditions have to be set in a way that no bonding occurs between the application layer and the carrier layer in order to enable the separation of the carrier layer from the application layer after application on the skin.

### Description of the Drawings

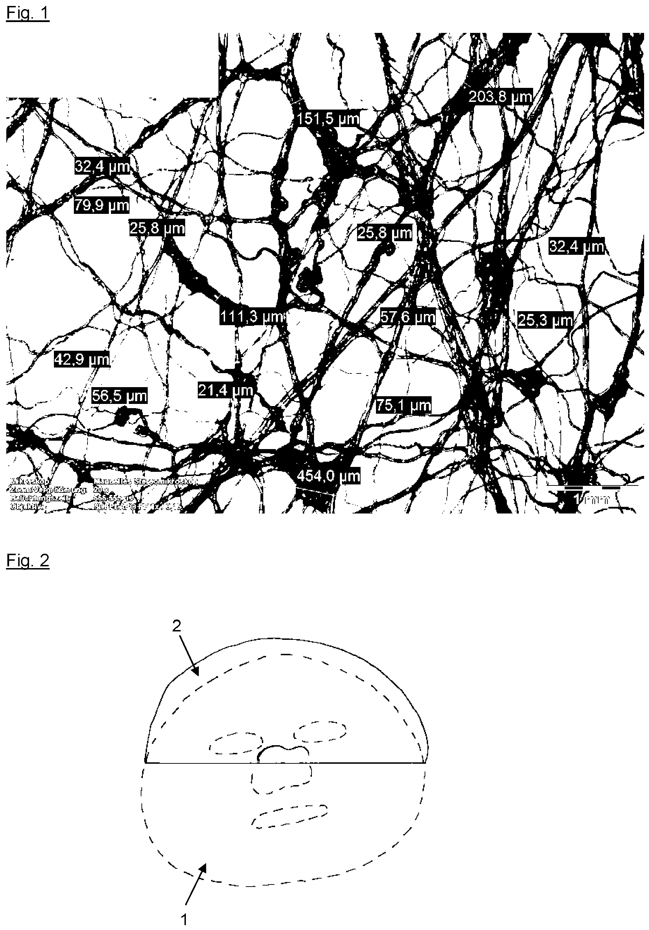

Hereinafter, exemplary embodiments of the invention are described with reference to the drawings, wherein
- Fig. 1: shows a photograph of a carrier layer according to the invention, taken from a stereomicroscope. Diameters of the fibers were determined by image analysis software. The free areas between the cellulosic fibers and their distances can be easily measured from this photograph, as well.
- Fig. 2: shows a face mask according to the invention, comprising an application layer (1) and a carrier layer (2), wherein in the upper part of the face mask both layers are still sticking together but in the lower part of the face mask the carrier layer (2) is already separated from the application layer (1). This figure also shows the openings for eyes, nose (here in the form of a flap) and mouth cut or punched in the application layer, typical for a face mask.

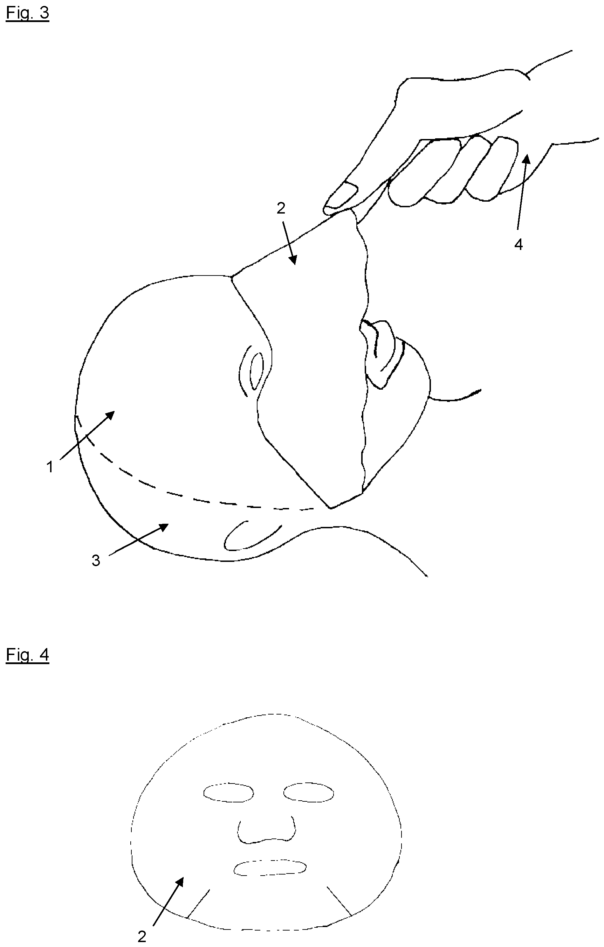

- Fig. 3: shows a test dummy head (3) with a face mask according to the invention applied to the face. Also shown is the hand (4) of a person applying the face mask, wherein the application layer (1) is placed on the face and the carrier layer (2) is already partly peeled off by the hand.
- Fig. 4: shows a carrier layer (2) of a face mask according to the invention that is completely peeled off the application layer (1), applied to a test dummy face. This figure also shows the openings for eyes, nose (here in the form of a flap) and mouth cut or punched in the carrier layer, typical for a face mask.

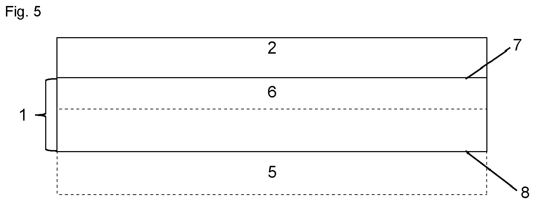

- Fig. 5: shows a schematic representation of a cross-section of the face mask illustrating an exemplary layer structure of the mask (before use). The application layer (1) has a skin-contacting surface (8) and an external surface (7). The application layer (1) can optionally be provided with a moisture-retaining layer (6). The external surface (7) is covered by the carrier layer (2). The skin-contacting surface (8) of the application layer (1) can optionally be covered by a protection layer (5). To apply the mask, the user first removes the protection layer (5) - if present -, then applies the application layer (1) together with the carrier layer (2) to the face and then removes the carrier layer (2), while the application layer (1) stays adhered to the skin of the face.

### Examples

All samples discussed below were conditioned at 23°C (±2°C) and 50% (±5%) relative humidity for 24 hours.

### Mass per Unit Area (basis weight):

The basis weight was determined according to NWSP 130.1.R0 (15).

### Thickness:

The thickness was determined according to NWSP 120.6.R0 (15) - Option A.

### Specific Total Hand of nonwoven fabrics:

Stiffness was measured using a "Handle-o-meter" (available from Thwing-Albert Instrument Company), Model 211-300, according to standard method NWSP 090.3.R0 (15) [EN], with ¼ inch slot width, stainless steel surface, 1000 g beam, 20x20cm sample size. The average value for total Hand was calculated according to NWSP 090.3.R0 (15) [EN]. Afterwards the average total Hand value was divided by the basis weight to generate a Specific Total Hand value. The dimension of the Specific Total Hand is [mN*m²/g].

### Determination of the maximum tensile force and the elongation at maximum tensile force (dry and wet):

Prior to all measurements, the samples were first conditioned at 23 °C (± 2 °C) and 50 % (± 5 %) relative humidity for 24 h. For all measurements, the samples had a size of 5 cm x 10 cm (width x length). The clamping length was 8 cm and the speed for testing 10 cm/min.

Maximum tensile force and elongation at maximum tensile force in MD and CD (in dry and wet state) were measured according to DIN EN 29 073 part 3 / ISO 9073 3 (in the version of year 1992).

To determine dry maximum tensile force and dry elongation at maximum tensile force, the samples were measured after the conditioning described above.

To determine wet maximum tensile force and wet elongation at maximum tensile force, the samples were wetted out 3 fold with demineralized water and were sealed within a plastic bag for 60 min to equilibrate moisture.

For all the maximum tensile force values (dry and wet, MD and CD) specific values were calculated by dividing through the basis weight of the sample.

### Stereomicroscope pictures:

Stereomicroscope Zeiss V12; camera DP 71; Software: Olympus Stream Motion; Magnification 20 fold.

### Example 1:

A carrier layer material was produced by the Lyocell meltblowing process as described in WO 2018/184938 A1. Its basis weight was 20 gsm. An exemplary picture of its structure is given in Fig. 1. Its Specific Total Hand value was 16.0 mN*m²/g.

Table 2 shows the mechanical properties of the carrier layer material of Example 1.

**Table 2:**

| Parameter | Unit | Value |
|---|---|---|
| Specific maximum tensile force MD dry | [N m²/g] | 0.54 |
| Specific maximum tensile force CD dry | [N m²/g] | 0.13 |
| Elongation at maximum tensile force MD dry | [%] | 4.6 |
| Elongation at maximum tensile force CD dry | [%] | 18.7 |
| Specific maximum tensile force MD wet | [N m²/g] | 0.19 |
| Specific maximum tensile force CD wet | [N m²/g] | 0.04 |
| Elongation at maximum tensile force [%]MD wet | [%] | 15.0 |
| Elongation at maximum tensile force [%]CD wet | [%] | 35.8 |

The carrier layer offers sufficient tensile strength to allow the processing and packaging of the application layer and to allow the application of the application layer to skin. The MD Elongations are not too high to allow the application of a stabilized application layer to skin and not too low to allow the application of the application layer to skin without too much fabric inherent stability.

### Example 2:

The carrier layer of Example 1 and an application layer (20 gsm) produced by the Lyocell meltblowing process as described in WO 2018/184938 A1 were combined in dry state and a cosmetic face mask was cut. The cosmetic face mask was folded, packed into a sachet and wetted out with cosmetic lotion 10 fold of its basis weight. Then the sachet was sealed and stored for 30 days. After 30 days the cosmetic face mask was taken out of the sachet, unfolded and applied to the skin with the application layer being in direct skin contact. With the carrier layer according to the invention the application of the application layer to the skin was much easier than without the carrier layer. The carrier layer was peeled off subsequently and the application layer was used as a common cosmetic face mask application layer for approx. 15 min to care the skin.

## Claims

1. Face mask comprising an application layer and a carrier layer, wherein the application layer is impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, **characterized in that** the carrier layer comprises regenerated cellulosic fibers.

2. Face mask according to claim 1, wherein the carrier layer comprises a nonwoven material comprising a network of substantially continuous regenerated cellulosic fibers.

3. Face mask according to claim 2, wherein the physical properties of the nonwoven material are modified by at least one process selected from a list comprising bonding, hydroentanglement, hydroembossing, perforation, needlepunch and/or chemical bonding.

4. Face mask according to any of the claims 1 to 3, wherein the cellulosic fibers in the carrier layer are multibonded by merging, hydrogen bonding and/or physically intermingling.

5. Face mask according to any of the claims 1 to 4, wherein the application layer comprises a moisture-retaining layer that is located at the external surface of the application layer, wherein the moisture-retaining layer preferably comprises a regenerated cellulosic material.

6. Face mask according to any of the claims 1 to 5, wherein the area of the carrier layer is bigger than the area of the application layer so that the carrier layer juts out of the application layer at least at a part of the edge of the application layer.

7. Face mask according to claim 2 or 3, wherein at least a part of the carrier layer is directly manufactured from lyocell spinning solution.

8. Face mask according to claim 7, wherein at least part of the cellulosic fibers of the carrier layer are integrally merged with one another at merging positions.

9. Face mask according to any of the claims 1 to 8, wherein the fibers of the carrier layer have diameters ranging from 1 µm to 5000 µm, preferably from 8 µm to 500 µm.

10. Face mask according to any of the claims 1 to 9, wherein the free areas between the cellulosic fibers of the carrier layer, measured horizontally on the surface of the carrier layer, show distances of between 1 µm and 15000 µm, preferably of between 10 µm and 3000 µm, between the fibers.

11. Face mask according to any of the claims 1 to 10, wherein the basis weight of the carrier layer is between 10 and 40 gsm, preferably of between 15 and 25 gsm.

12. Face mask according to any of the claims 1 to 11, wherein the carrier layer has a Specific Total Hand -value ranging from 4 to 30 mN*m²/g, preferably from 5 to 20 mN*m²/g, more preferably from 10 to 20 mN*m²/g.

13. Face mask according to claim 7 or 8, wherein the regenerated cellulosic fibers of the carrier layer are essentially free of copper and/or nickel.

14. Face mask according to any of the claims 1 to 13, wherein the regenerated cellulosic fibers of the carrier layer are essentially free of finish agents.

15. Face mask according to any of the claims 1 to 13, wherein the cellulosic fibers of the carrier layer are treated with a finishing imparting hydrophobic properties to the carrier layer.

16. Face mask according to any of the claims 1 to 15, wherein the carrier layer has an elongation at maximum tensile force [%]MD wet of between 4 and 30% and an elongation at maximum tensile force [%]CD wet of between 4 and 50%.

17. Face mask according to any of the claims 1 to 17, wherein the application layer comprises regenerated cellulosic fibers.

18. Carrier layer for a face mask according to any of the claims 1 to 18, **characterized in that** the carrier layer comprises regenerated cellulosic fibers.

19. Precursor for a face mask, comprising an application layer and a carrier layer, wherein the application layer is configured to be impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, **characterized in that** the carrier layer comprises regenerated cellulosic fibers.

20. Method for manufacturing a face mask, wherein the face mask comprises an application layer and a carrier layer, wherein the application layer is impregnated with a lotion and comprises a skin-contacting surface and an external surface, wherein the application layer is configured to be applied with its skin-contacting surface on the skin of a user's face, wherein the carrier layer abuts the application layer on its external surface and provides additional stability to the application layer, wherein the carrier layer is removable from the application layer after application of the application layer to the face, **characterized in that** the carrier layer and the application layer comprise regenerated cellulosic fibers.

21. Method for manufacturing a face mask according to claim 20, wherein at least on of or preferably both of the carrier layer and the application layer are manufactured according to a Lyocell meltblowing process.

22. Method for manufacturing a face mask according to claim 21, wherein the carrier layer and the application layer are manufactured inline jointly on the same Lyocell meltblowing production line.
